(19) Europäisches Patentamt
European Patent Office
Office européen des brevets

(11) **EP 4 144 538 B1**

(12) **EUROPEAN PATENT SPECIFICATION**

(45) Date of publication and mention
of the grant of the patent:
**03.07.2024 Bulletin 2024/27**

(21) Application number: **22193019.1**

(22) Date of filing: **30.08.2022**

(51) International Patent Classification (IPC):
***B60C 7/14*** *(2006.01)*      ***B60C 9/18*** *(2006.01)*
***B60C 9/20*** *(2006.01)*

(52) Cooperative Patent Classification (CPC):
**B60C 9/20; B60C 7/146; B60C 9/1821;**
**B60C 9/2009;** B60C 2009/1878; B60C 2009/2012;
B60C 2009/2016; B60C 2009/2064; Y02T 10/86

(54) **NON-PNEUMATIC TIRE WITH IMPROVED SHEAR BAND**

LUFTLOSER REIFEN MIT VERBESSERTEM SCHERBAND

PNEU NON PNEUMATIQUE AVEC BANDE DE CISAILLEMENT AMÉLIORÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.09.2021 US 202163260810 P
12.07.2022 US 202217811924**

(43) Date of publication of application:
**08.03.2023 Bulletin 2023/10**

(73) Proprietor: **The Goodyear Tire & Rubber Company
Akron, OH 44316 (US)**

(72) Inventors:
• **MILLER, Andrew James
Berlin Center, 44401 (US)**
• **MYERS, Ann Elizabeth
Cuyahoga Falls, 44221 (US)**

(74) Representative: **Kutsch, Bernd
Goodyear S.A.
Patent Department
Avenue Gordon Smith
7750 Colmar-Berg (LU)**

(56) References cited:
EP-A1- 3 135 501      EP-A1- 3 196 048
EP-A1- 3 323 635      WO-A1-2008/045098
WO-A1-2019/050549

**Description**

Field of the Invention

The present invention relates generally to vehicle tires and non-pneumatic tires, and more particularly, to a shear band and non-pneumatic tire.

Background of the Invention

The pneumatic tire has been the solution of choice for vehicular mobility for over a century. The pneumatic tire is a tensile structure. The pneumatic tire has at least four characteristics that make the pneumatic tire so dominant today. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed gasses. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

The purpose of the shear band is to transfer the load from contact with the ground through tension in the spokes or connecting web to the hub, creating a top loading structure. When the shear band deforms, its preferred form of deformation is shear over bending. The shear mode of deformation occurs because of the inextensible membranes located on the outer portions of the shear band.

Prior art non-pneumatic tires typically have a shear band made from rubber materials sandwiched between at least two layers of inextensible belts or membranes. The disadvantage to this type of construction is that the ride and handling of the vehicle may suffer due to the large amount of rubber in the shearband. In addition, the rolling resistance may also suffer due to the large amount of rubber. Thus, an improved shearband for a non-pneumatic tire is desired that has improved vehicle handling and rolling resistance.

WP 2019/050549 A1 describes a non-pneumatic tire in accordance with the preamble of claim 1.

Further non-pneumatic tires with a shear band comprising two cross-angled belts are known from EP 3 196 048 A1 and EP 3 135 501 A1.

Further shear band construction for non-pneumatic tires are known from EP 3 323 635 A1 and WO 2008/045098.

Summary of the Invention

The invention relates to a non-pneumatic tire in accordance with claim 1.

Dependent claims refer to preferred embodiments of the invention.

Brief Description of the Drawings

The present invention will be better understood through reference to the following description and the appended drawings, in which:

FIG. 1 is a perspective view of a first embodiment of a non-pneumatic tire of the present invention; and
FIG. 2 is a cross-sectional view of a first embodiment of a shear band of the present invention.

Definitions

The following terms are defined as follows for this description.

"Equatorial Plane" means a plane perpendicular to the axis of rotation of the tire passing through the centerline of the tire.

"Inextensible" means that a given layer has an extensional stiffness greater than 172325 Pa.

Detailed Description of Preferred Embodiments of the Invention

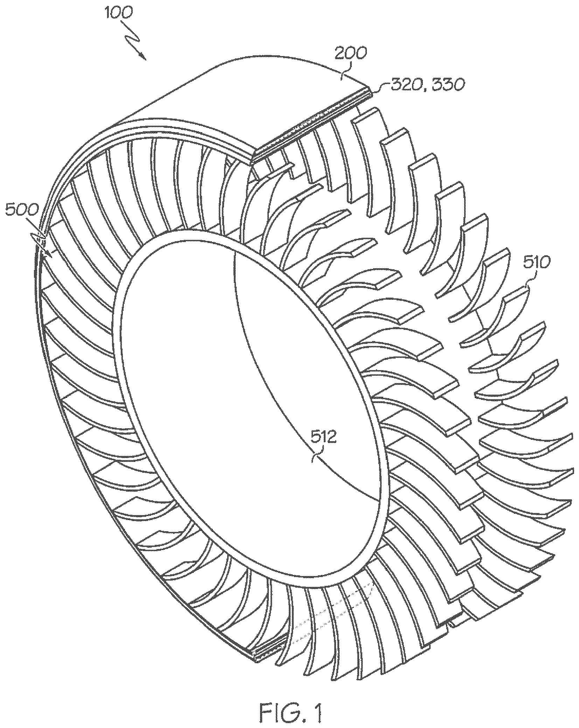

A first embodiment of a non-pneumatic tire 100 of the present invention is shown in FIG. 1. The tire of the present invention includes a radially outer ground engaging tread 200, a shear band 300, and a connecting web 500. The tire tread 200 may include elements such as ribs, blocks, lugs, grooves and sipes as desired to improve the performance of the tire in various conditions. The connecting web 500 is mounted on hub 512 and may have different designs, as described in more detail, below. The non-pneumatic tire of the present invention is designed to be a top loading structure, so that the shear band 300 and the connecting web 500 efficiently carry the load. The connecting web 500 is designed to be a stiff structure when in tension that buckles or deforms in the tire footprint and does not compress or carry a compressive load. This allows the rest of the connecting web not in the footprint area the ability to carry the load, resulting in a very load efficient structure. It is desired to allow the shearband 300 to bend to overcome road obstacles. The approximate load distribution is preferably such that approximately 90-100% of the load is carried by the shearband 300 and the upper portion of the connecting web 500, so that the lower portion of the connecting web 500 carry virtually zero of the load, and preferably less than 10%.

Shear Band

The shear band 300 is preferably an annular structure that is located radially inward of the tire tread 200 and functions to transfer the load from the bottom of the tire 100 which is in contact with the ground to the spokes and to the hub 512, creating a top loading structure. The annular structure is called a shear band 300 because the preferred form of deformation is shear over bending.

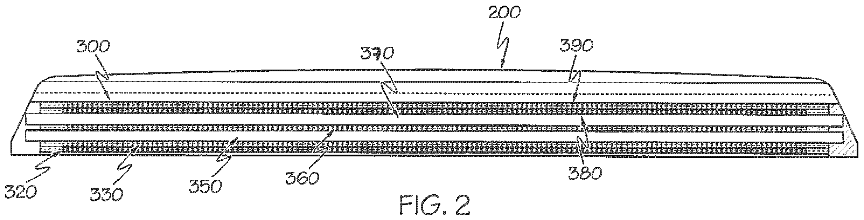

A first embodiment of a shear band 300 is shown in FIG. 2. The shear band may include a first, second and third reinforcement layer 320, 330, 360. Each reinforcement layer is formed of a plurality of closely spaced parallel reinforcement cords. The parallel reinforcement cords may be formed from a calendared fabric so that the reinforcement cords are embedded in an elastomeric coating. Preferably, each reinforcement layer 320, 330, 360 is formed from spirally winding a single end cord. Preferably, the single end cord has multiple filaments.

The first and second reinforcement layers 320, 330 are preferably the radially innermost reinforcement layers of the shear band 300, and the second reinforcement layer 330 is located radially outward of the first membrane layer. The third reinforcement layer 360 is located radially outward of the second reinforcement layer 330. The reinforcement cords of each layer 320, 330, 360 are preferably angled in the range of five degrees or less with respect to the tire equatorial plane. The reinforcing cords of the first and second reinforcement layers 320, 330 may be suitable tire belt reinforcements, such as monofilaments or cords of steel, aramid, and/or other high modulus textiles. For example, the reinforcing cords may be steel cords of four wires of 0.28 mm diameter (4 x 0.28) or 0.22 mm diameter. In another example, the reinforcing cords may be steel cords of 6 wires, with five wires surrounding a central wire (5 +1) construction. The reinforcement cords in one or both of the layers 320, 330 may be inextensible.

The third reinforcement layer 360 is separated from the second reinforcement layer 330 by a first shear layer 350. The shear band 300 further comprises a second shear layer 370 located radially outward of the third reinforcement layer 360. The first and second shear layer 350, 370 is formed of an elastomer or rubber having a shear modulus in the range of 3 MPa to 30 MPa, or more preferably in the range of 10 MPa to 20 MPa.

The shear modulus is defined using a pure shear deformation test, recording the stress and strain, and determining the slope of the resulting stress-strain curve.

The shear band 300 further includes a first angled belt 380 and a second angled belt 390. The first angled belt 380 is located radially outward of the second shear layer 370, and the second angled belt 390 is located radially outward of the first angled belt 380. The first and second angled belts 380, 390 each have parallel reinforcement cords that are embedded in an elastomeric coating. The parallel reinforcement cords are preferably angled in the range of 15 to 30 degrees with respect to the tire equatorial plane. Preferably, the angle of the parallel reinforcement cords is in the range of from 20 to 25 degrees. Preferably, the angle of the reinforcement cords of the first angled belt is in the opposite direction of the angle of the reinforcement cords in the second angled belt. It is additionally preferred that the reinforcement cords in one or both of the belts 380, 390 are inextensible.

Shear Band Properties

The shear band has an overall shear stiffness GA. The shear stiffness GA may be determined by measuring the deflection on a representative test specimen taken from the shear band. The upper surface of the test specimen is subjected to a lateral shear force F. The test specimen is a representative sample taken from the shear band and having the same radial thickness as the shearband. The shear stiffness GA is then calculated from the following equation:

$$GA = F*L/\Delta X,$$

where F is the shear load, L is the shear layer thickness, and delta X is the shear deflection. It is preferred that GA be I the range of about 15,000 N to 35,000N, and more preferably, about 25,000N.

The shear band has an overall bending stiffness EI. The bending stiffness EI may be determined from beam mechanics using the three point bending test. It represents the case of a beam resting on two roller supports and subjected to a concentrated load applied in the middle of the beam. The bending stiffness EI is determined from the following equation: EI = PL3/48* $\Delta X$, where P is the load, L is the beam length, and $\Delta X$ is the deflection. It is preferred that EI be in a range of from 180 to 240 E6 N-mm$^2$ or about equal to 220 E6 N-mm$^2$.

It is desirable to maximize the bending stiffness of the shearband EI and minimize the shear band stiffness GA. The acceptable ratio of GA/EI would be between 0.01 and 20, with an ideal range between 0.01 and 5. EA is the extensible stiffness of the shear band, and it is determined experimentally by applying a tensile force and measuring the change in length. The ratio of the EA to EI of the shearband is acceptable in the range of 1000 to 3000, and more preferably in the range of 1500-3000.

Connecting Web

The non-pneumatic tire of the present invention further includes a connecting web 500 as shown in FIG. 1. The connecting web preferably comprises a plurality of circumferentially aligned spokes 510 that extend from an inner radius to an outer radius. The spokes are preferably oriented in the radial direction. The spokes may be curved or straight. Preferably, the non-pneumatic tire comprises two sets of circumferentially aligned spokes. The spokes may have different cross-sectional designs. The spokes functions to carry the load transmitted from the shear layer. The spokes are primarily loaded in tension and shear, and carry no load in compression. Each spoke as described herein preferably has an axial thickness A that is substantially less than the axial thickness AW of the non-pneumatic tire. The axial thickness A is in the range of 5-20% of AW, more preferably 5-10% AW.

The spokes are preferably formed of an elastic material such as rubber or a thermoplastic elastomer. The spokes are designed such that the spokes have a low resistance to radial deformation and a higher resistance to the lateral deformation of the tire.

**Claims**

1. A non-pneumatic tire comprising an outer annular tread band (200), a shear band (300) located radially under the outer annular tread band (200), and a plurality of connecting structures (500) connecting the tread band (200) and the shear band (300) to a hub (512);

   wherein the shear band (300) comprises a first reinforcement layer (320) and a second reinforcement layer (330) located radially outward of the first reinforcement layer (320), wherein the first and second reinforcement layers (320, 330) are formed of a plurality of parallel reinforcement cords arranged at an angle of 10 degrees or less with respect to the tire equatorial plane;
   wherein the shear band (300) further comprises a first angled belt layer (380) located radially outward of the second reinforcement layer (330), and a second angled belt layer (390) located radially outward of the first angled belt layer (380), wherein the first and second angled belt layers (380, 390) each have parallel reinforcement cords arranged at an angle in a range of from 15 to 30 degrees with respect to the tire equatorial plane; and wherein the angle of the parallel reinforcement cords in the second angled belt layer (390) is equal to but of opposite direction than the angle of the parallel reinforcement cords in the first angled belt layer (380);
   **characterized in that** the shear band (300) includes a third reinforcement layer (360) comprising a plurality of parallel reinforcement cords arranged at an angle of 10 degrees or less with respect to the tire equatorial plane, the third reinforcement layer (360) being located radially between the second reinforcement layer (330) and the first angled belt layer (380).

2. The non-pneumatic tire of claim 1, wherein the first and second reinforcement layers (320, 330) are formed of a plurality of parallel reinforcement cords arranged at an angle of 2 degrees or less, such as 0 degree, with respect to the tire equatorial plane.

3. The non-pneumatic tire of claim 1 or 2, wherein the plurality of parallel reinforcement cords of the third reinforcement layer (360) are arranged at an angle of 2 degrees or less, such as 0 degree, with respect to the tire equatorial plane.

4. The non-pneumatic tire of at least one of the previous claims further including a first shear layer (350) located radially between the second reinforcement layer (330) and the first angled belt layer (380).

5. The non-pneumatic tire of claim 4 wherein the first shear layer (350) is located radially between the second reinforcement layer (330) and the third reinforcement layer (360).

6. The non-pneumatic tire of at least one of the previous claims further including a second shear layer (370) located radially between the second reinforcement layer (330) and the first angled belt layer (380).

7. The non-pneumatic tire of claim 6 wherein the second shear layer (370) is located radially between the third reinforcement layer (360) and the first angled belt layer (380).

8. The non-pneumatic tire of at least one of the previous claims wherein the parallel reinforcement cords in the first reinforcement layer (320) and/or in the second reinforcement layer (330) and/or in the reinforcement layer (330) are steel cords.

9. The non-pneumatic tire of at least one of the previous claims wherein the parallel reinforcement cords in the first angled belt layer (380) are steel cords.

10. The non-pneumatic tire of at least one of the previous claims wherein the parallel reinforcement cords in the second angled belt layer (390) or in the first and second angled belt layers (380, 390) are steel cords.

11. The non-pneumatic tire of at least one of the previous claims wherein the first and second angled belt layers (380, 390) each have parallel reinforcement cords arranged at an angle in a range of from 20 to 25 degrees with respect to the tire equatorial plane,

12. The non-pneumatic tire of at least one of the previous claims wherein the first shear layer (350) is formed of an elastomer or rubber having a shear modulus in the range of from 3 MPa to 30 MPa, preferably in the range of from 10 MPa to 20 MPa.

13. The non-pneumatic tire of at least one of the previous claims wherein the second shear layer (370) or the first and second shear layer (350) is formed of an elastomer or rubber having a shear modulus in the range of from 3 MPa to 30 MPa, preferably in the range of from 10 MPa to 20 MPa.

**Patentansprüche**

1. Nicht-pneumatischer Reifen, der ein äußeres ringförmiges Band (200) des Laufflächenbandes, ein Scherband (300) das radial unter dem äußeren ringförmigen Band (200) des Laufflächenbandes angeordnet ist, und eine Vielzahl von Verbindungsstrukturen (500), die das Band (200) des Laufflächenbandes und das Scherband (300) mit einer Nabe (512) verbinden;

   wobei das Scherband (300) eine erste Verstärkungsschicht (320) und eine zweite Verstärkungsschicht (330) aufweist, die radial außerhalb der ersten Verstärkungsschicht (320) angeordnet ist, wobei die erste und die zweite Verstärkungsschicht (320, 330) aus einer Vielzahl von parallelen Verstärkungskorden gebildet sind, die in einem Winkel von 10 Grad oder weniger in Bezug auf die Reifenäquatorialebene angeordnet sind;
   wobei das Scherband (300) ferner eine erste abgewinkelte Gürtellage (380), die radial außerhalb der zweiten Verstärkungslage (330) angeordnet ist, und eine zweite abgewinkelte Gürtellage (390), die radial außerhalb der ersten abgewinkelten Gürtellage (380) angeordnet ist, umfasst, wobei die erste und die zweite abgewinkelte Gürtellage (380, 390) jeweils parallele Verstärkungskorde aufweisen, die in einem Winkel in einem Bereich von 15 bis 30 Grad in Bezug auf die Reifenäquatorialebene angeordnet sind; und wobei der Winkel der parallelen Verstärkungskorde in der zweiten abgewinkelten Gürtellage (390) gleich, aber in entgegengesetzter Richtung zu dem Winkel der parallelen Verstärkungskorde in der ersten abgewinkelten Gürtellage (380) ist;
   **dadurch gekennzeichnet, dass** das Scherband (300) eine dritte Verstärkungsschicht (360) enthält, die eine Vielzahl von parallelen Verstärkungskorden umfasst, die in einem Winkel von 10 Grad oder weniger in Bezug auf die Reifenäquatorialebene angeordnet sind, wobei die dritte Verstärkungsschicht (360) radial zwischen der zweiten Verstärkungsschicht (330) und der ersten gewinkelten Gürtellage (380) angeordnet ist.

2. Nicht-pneumatische Reifen nach Anspruch 1, wobei die erste und die zweite Verstärkungsschicht (320, 330) aus einer Vielzahl von parallelen Verstärkungskorden gebildet sind, die in einem Winkel von 2 Grad oder weniger, wie z.B. 0 Grad, in Bezug auf die Reifenäquatorialebene angeordnet sind.

3. Nicht-pneumatische Reifen nach Anspruch 1 oder 2, wobei die Vielzahl der parallelen Verstärkungskorde der dritten Verstärkungslage (360) in einem Winkel von 2 Grad oder weniger, wie z.B. 0 Grad, in Bezug auf die Reifenäquatorialebene angeordnet sind.

4. Nicht-pneumatische Reifen nach mindestens einem der vorhergehenden Ansprüche enthält außerdem eine erste Scherschicht (350), die radial zwischen der zweiten Verstärkungsschicht (330) und der ersten gewinkelten (380) angeordnet ist.

5. Nicht-pneumatische Reifen nach Anspruch 4, wobei die erste Scherschicht (350) radial angeordnet ist zwischen der zweiten Verstärkungslage (330) und der dritten Verstärkungslage (360) angeordnet ist.

6. Nicht-pneumatische Reifen nach mindestens einem der vorangegangenen Ansprüche umfasst ferner eine zweite Scherschicht (370), die radial zwischen der zweiten Verstärkungsschicht (330) und der ersten gewinkelten Gürtellage (380) angeordnet ist.

7. Nicht-pneumatische Reifen nach Anspruch 6, wobei die zweite Scherschicht (370) radial zwischen der dritten Verstärkungslage (360) und der ersten abgewinkelten Gürtellage (380) angeordnet ist.

8. Nicht-pneumatische Reifen nach mindestens einem der vorhergehenden Ansprüche, wobei die parallelen Verstärkungskorde in der ersten Verstärkungsschicht (320) und/oder in der zweiten Verstärkungsschicht (330) und/oder in der Verstärkungsschicht (330) Stahlkorde sind.

9. Nicht-pneumatische Reifen nach mindestens einem der vorhergehenden Ansprüche, wobei die parallelen Verstärkungskorde in der ersten gewinkelten Gürtellage (380) Stahlkorde sind.

10. Nicht-pneumatische Reifen nach mindestens einem der vorhergehenden Ansprüche, wobei die parallelen Verstärkungskorde in der zweiten gewinkelten Gürtellage (390) oder in der ersten und zweiten gewinkelten Gürtellage (380, 390) Stahlkorde sind.

11. Nicht-pneumatische Reifen nach mindestens einem der vorhergehenden Ansprüche, wobei die erste und die erste und die zweite abgewinkelte Gürtellage (380, 390) jeweils parallele Verstärkungskorde aufweisen, die in einem Winkel in einem Bereich von 20 bis 25 Grad in Bezug auf die Reifenäquatorialebene angeordnet sind,

12. Nicht-pneumatische Reifen nach mindestens einem der vorhergehenden Ansprüche, wobei die erste Scherschicht (350) aus einer Schicht (350) aus einem Elastomer oder Kautschuk mit einem Schermodul im Bereich von 3 MPa bis 30 MPa, vorzugsweise im Bereich von 10 MPa bis 20 MPa, gebildet ist.

13. Nicht-pneumatische Reifen nach mindestens einem der vorhergehenden Ansprüche, wobei die zweite Scherschicht (370) oder die erste und zweite Scherschicht (350) aus einem Elastomer oder Kautschuk mit einem Schermodul im Bereich von 3 MPa bis 30 MPa, vorzugsweise im Bereich von 10 MPa bis 20 MPa, gebildet ist.

**Revendications**

1. Bandage non pneumatique qui comprend une bande annulaire externe (200) de la bande de roulement, une bande de cisaillement (300) qui est disposée, dans la direction radiale, en dessous de la bande annulaire externe (200) de la bande de roulement, et un certain nombre de structures de liaison (500) qui relient la bande (200) de la bande de roulement et la bande de cisaillement (300) à un moyeu (512) ;

dans lequel la bande de cisaillement (300) comprend une première couche de renforcement (320) et une deuxième couche de renforcement (330) qui est disposée, dans la direction radiale, à l'extérieur de la première couche de renforcement (320) ; dans lequel la première et la deuxième couche de renforcement (320, 330) sont réalisées à partir d'un certain nombre de câblés de renforcement parallèles qui sont disposés en formant un angle de 10 degrés ou moins par rapport au plan équatorial du bandage pneumatique ;
dans lequel la bande de cisaillement (300) comprend en outre une première couche de ceinture angulaire (380) qui est disposée, dans la direction radiale, à l'extérieur de la deuxième couche de renforcement (330), et une deuxième couche de ceinture angulaire (390) qui est disposée, dans la direction radiale, à l'extérieur de la première couche de ceinture angulaire (380) ; dans lequel la première et la deuxième couche de ceinture angulaire (380, 390) possèdent chacune des câblés de renforcement parallèles qui sont disposés en formant un angle dans une plage allant de 15 à 30 degrés par rapport au plan équatorial du bandage pneumatique ; et dans lequel l'angle qui est formé par les câblés de renforcement parallèles dans la deuxième couche de ceinture angulaire (390) est égal à celui qui est formé par les câblés de renforcement parallèles dans la première couche de ceinture angulaire (380), mais direction opposée à celle de l'angle précité ;
**caractérisé en ce que** la bande de cisaillement (300) englobe une troisième couche de renforcement (360) qui comprend un certain nombre de câblés de renforcement parallèles qui sont disposés en formant un angle de 10 degrés ou moins par rapport au plan équatorial du bandage pneumatique, la troisième couche de renforcement (360) étant disposée, dans la direction radiale, entre la deuxième couche de renforcement (330) et la première couche de ceinture angulaire (380).

2. Bandage non pneumatique selon la revendication 1, dans lequel la première et la deuxième couche de renforcement (320, 330) sont réalisées à partir d'un certain nombre de câblés de renforcement parallèles qui sont disposés en formant un angle de 2 degrés ou moins, tel qu'un angle de 0 degré, par rapport au plan équatorial du bandage pneumatique.

3. Bandage non pneumatique selon la revendication 1 ou 2, dans lequel lesdits plusieurs câblés de renforcement parallèles de la troisième couche de renforcement (360) sont disposés en formant un angle de 2 degrés ou moins, tel qu'un angle de 0 degré, par rapport au plan équatorial du bandage pneumatique.

4. Bandage non pneumatique selon au moins une des revendications précédentes, qui englobe en outre une première couche de cisaillement (350) qui est disposée, dans la direction radiale, entre la deuxième couche de renforcement (330) et la première couche de ceinture angulaire (380).

5. Bandage non pneumatique selon la revendication 4, dans lequel la première couche de cisaillement (350) est disposée, dans la direction radiale, entre la deuxième couche de renforcement (330) et la troisième couche de renforcement (360).

6. Bandage non pneumatique selon au moins une des revendications précédentes, qui englobe en outre une deuxième couche de cisaillement (370) qui est disposée, dans la direction radiale, entre la deuxième couche de renforcement (330) et la première couche de ceinture angulaire (380).

7. Bandage non pneumatique selon la revendication 6, dans lequel deuxième couche de cisaillement (370) est disposée, dans la direction radiale, entre la troisième couche de renforcement (360) et la première couche de ceinture angulaire (380).

8. Bandage non pneumatique selon au moins une des revendications précédentes, dans lequel les câblés de renforcement parallèles dans la première couche de renforcement (320) et/ou dans la deuxième couche de renforcement (330) et/ou dans la couche de renforcement (330) sont des câblés en acier.

9. Bandage non pneumatique selon au moins une des revendications précédentes, dans lequel les câblés de renforcement parallèles dans la première couche de ceinture angulaire (380) sont des câblés en acier.

10. Bandage non pneumatique selon au moins une des revendications précédentes, dans lequel les câblés de renforcement parallèles dans la deuxième couche de ceinture angulaire (390) ou dans la première et la deuxième couche de ceinture angulaire (380, 390) sont des câblés en acier.

11. Bandage non pneumatique selon au moins une des revendications précédentes, dans lequel la première et la deuxième couche de ceinture angulaire (380, 390) possèdent chacune des câblés de renforcements parallèles qui sont disposés en formant un angle dans une plage allant de 20 à 25 degrés par rapport au plan équatorial du bandage pneumatique.

12. Bandage non pneumatique selon au moins une des revendications précédentes, dans lequel la première couche de cisaillement (350) est réalisée à partir d'un élastomère ou d'un caoutchouc qui possède un module de cisaillement dans la plage allant de 3 MPa à 30 MPa, de préférence dans la plage allant de 10 MPa à 20 MPa.

13. Bandage non pneumatique selon au moins une des revendications précédentes, dans lequel la deuxième couche de cisaillement (370) ou la première et la deuxième couche de cisaillement (350) est/sont réalisée(s) à partir d'un élastomère ou d'un caoutchouc qui possède un module de cisaillement dans la plage allant de 3 MPa à 30 MPa, de préférence dans la plage allant de 10 MPa à 20 MPa.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3196048 A1
- EP 3135501 A1
- EP 3323635 A1
- WO 2008045098 A